# EUROPÄISCHE PATENTSCHRIFT

(11) **EP 0 467 258 B1**
(45) Veröffentlichungstag und Bekanntmachung des Hinweises auf die Patenterteilung: **04.06.1997**
(21) Anmeldenummer: 91111753.9
(22) Anmeldetag: 15.07.1991
(51) Int. Cl.: C08G 59/02, C08G 59/14, C08G 59/22

(54) **Copolymerisierbare Zusammensetzung, diese enthaltende härtbare Harzmasse und ihre Verwendung**
Copolymerisable composition, curable resin composition containing this and their use
Composition copolymérisable, composition durcissable contenant celui-ci et leur utilisation

(30) Priorität: 20.07.1990 DE 4023145
(43) Veröffentlichungstag der Anmeldung: 22.01.1992
(73) Patentinhaber: THERA Patent GmbH & Co. KG Gesellschaft für industrielle Schutzrechte, D-82229 Seefeld (DE)
(72) Erfinder: Wanek, Erich, Dr., W-8912 Kaufering (DE)
(74) Vertreter: Bunke, Holger, Dr.rer.nat. Dipl.-Chem.

(56) Entgegenhaltungen:
- EP-A- 0 056 427
- EP-A- 0 221 559
- EP-A- 0 230 619
- US-A- 4 141 926

## Beschreibung

Die Erfindung betrifft eine copolymerisierbare Zusammensetzung, die im wesentlichen aus mit endständigen Epoxidgruppen modifizierten Polymeren aus der Gruppe der Polyether oder Polysiloxane besteht, eine diese copolymerisierbare Zusammensetzung enthaltende härtbare Harzmasse, die vorzugsweise zum Kleben, Abdichten, Beschichten und Vergießen von Substraten verwendet werden kann, sowie die Verwendung dieser copolymerisierbaren Zusammensetzung zur Plastifizierung, Elastifizierung und Flexibilisierung von Epoxidharzen.

Epoxidharze werden seit langem als Kleb- und Vergußstoffe sowie als Beschichtungsmaterialien eingesetzt, da sie sich durch eine hohe Kohäsion und ein sehr gutes Adhäsionsvermögen an den meisten Substraten auszeichnen. Zur Herstellung der Epoxidharze werden im allgemeinen aromatische oder cycloaliphatische, mindestens bifunktionelle Epoxide verwendet, die zusammen mit üblichen Härterkomponenten wie Aminen, Thiolen, Carbonsäureanhydriden oder mit Härtungskatalysatoren für die Photopolymerisation meist hart-elastische bis spröde Produkte mit relativ hohem Elastizitätsmodul ergeben.

Die Epoxidharze müssen deshalb für viele Anwendungen flexibilisiert werden. Hierzu wurde in der US-PS 3 678 131 vorgeschlagen, den Harzmassen Umsetzungsprodukte von carboxylgruppenhaltigen Butadien-Acrylnitril-Copolymeren mit Polyepoxiden sowie 2,2-Bis(4-hydroxy-phenyl)sulfon zuzusetzen. Der Zusatz von Butadien-Acrylnitril-Copolymeren mit endständigen Epoxidgruppen wird auch gemäß der US-PS 3 947 522 vorgeschlagen. Die unter Verwendung der genannten kautschukartigen Zusätze hergestellten, modifizierten Epoxidharze zeigen nach ihrer Aushärtung bzw. Vernetzung zwar eine erhöhte Elastizität, doch weisen sie noch eine ungenügende Lagerstabilität auf. Die ausgehärteten modifizierten Harze sind in der Regel nicht farblos-durchsichtig, sondern gelbbraun und trübe. Deshalb kommen sie für die Verwendung als lichthärtbare, photopolymerisierbare Harze nicht in Frage.

Aus der EP-A- 221 559 sind photocopolymerisierbare Zusammensetzungen bekannt, die ein cycloaliphatisches Epoxid, ein von einem Alkylenoxid abgeleitetes Polyol mit einem mittleren Molekulargewicht von 2000 bis 4500 sowie einen Photoinitiator umfassen. Diese Zusammensetzungen werden durch Belichten unter Verwendung von UV-Strahlen gehärtet und sollen im ausgehärteten Zustand Beschichtungen ergeben, die eine hohe Elastizität, Zähigkeit und Stoßfestigkeit aufweisen. Eine Flexibilisierung von Epoxidharzen mit den so erhaltenen Polymeren wird in der EP-A- 221 559 nicht angesprochen.

Die EP-A2- 0 056 427 betrifft ein Verfahren zur Flexibilisierung von Epoxidharzen durch Zusatz von Carboxylgruppen aufweisenden Polymerisaten. Diese Polymerisate sind erhältlich durch gemeinsame Polymerisation von Alkylestern der Acryl- und/oder Methacrylsäure mit 1 bis 8 Kohlenstoffatomen im Alkylrest, Vinylacetat und/oder Acrylnitril, Acryl-, Methacryl- und/oder Itaconsäure, Glycidylacrylat und/oder Glycidylmethacrylat, sowie, gegebenenfalls, Acryl- und/oder Vinylmonomeren, die von den vorgenannten Monomeren verschieden sind.

Darüber hinaus wird in der EP-A2- 0 056 427 vorgeschlagen, dieses Polymerisat nur zu einem Teil der Gesamtmenge des Epoxidharzes zur Modifizierung zuzusetzen, wobei die modifizierte Teilmenge noch etwa 40 Mol.-% Epoxidgruppen aufweisen muß. Diese Teilmodifizierung wird vorzugsweise mit einem niedriger viskosen Epoxidharz, wie beispielsweise mit den Diglycidylethern aliphatischer Diole, z.B. des 1,4-Butandiols, 1,6-Hexandiols oder des Neopentylglycols, durchgeführt.

In der japanischen Patentveröffentlichung 59-030817 sind flexibilisierte Epoxidharze beschrieben, die durch Umsetzung von Polycaprolactonen mit Dicarbonsäuren oder deren Anhydriden und mit cycloaliphatischen Epoxidharzen erhalten werden. Die Herstellung dieser Harze verläuft jedoch über mehrere Zwischenstufen, die zu wenig einheitlichen Polymeren führen, so daß die gewünschten physikalischen Eigenschaften nur schwer und nicht streng reproduzierbar eingestellt werden können. Außerdem sind auch diese Harze nicht ausreichend klar-durchsichtig, so daß eine lichtinduzierte Härtung nicht zu befriedigenden, standardisierbaren Ergebnissen führt.

Aus der EP-PS 0 119 425 sind photocopolymerisierbare Beschichtungsmassen auf Basis von Epoxidharzen bekannt, denen cycloaliphatische Monoepoxide als reaktive Verdünnungsmittel zugesetzt werden, um auf umweltbelastende organische Lösungsmittel zur Einstellung der für die Verwendung der Massen erforderlichen Viskosität vollständig verzichten zu können. Unter den dort beschriebenen photocopolymerisierbaren Zusammensetzungen befinden sich solche, die aus einem Gemisch aus (a) einem cycloaliphatischen Diepoxid, beispielsweise 3,4-Epoxycyclohexylmethyl-3',4'-epoxycyclohexan-carboxylat, (b) einem Polyol, beispielsweise einem Polyalkylenoxidgruppen enthaltenden Polyetherpolyol, (c) einem cycloaliphatischen Monoepoxid und (d) einem Photoinitiator bestehen. Sobald diese Gemische aktinischer Strahlung im ultravioletten oder sichtbaren Bereich oder einem Elektronenstrahl ausgesetzt werden, wobei Bestrahlungszeiten von weniger als 1 Sekunde ausreichen können, läuft die Photocopolymerisation bis zur vollständigen Vernetzung und Härtung ab. Mit den dort beschriebenen Massen läßt sich zwar eine gewisse Erhöhung der Flexibilität der ausgehärteten Harze erreichen, allerdings nur auf Kosten der Erhöhung der Viskosität der noch nicht gehärteten Zusammensetzungen, die durch Zusatz cycloaliphatischer Monoepoxide wieder abgesenkt werden muß. Auch die Lagerbeständigkeit der bekannten copolymerisierbaren, lichthärtbaren Zusammensetzungen ist ebenso unbefriedigend wie die Witterungsbeständigkeit der daraus hergestellten gehärteten Harze.

Der Erfindung liegt die Aufgabe zugrunde, eine copolymerisierbare Zusammensetzung bereitzustellen, die die Flexibilisierung von Epoxidharzen bewirkt und deren Verwendung als Mittel zur Modifizierung von Epoxidharzmassen, insbesondere von lichthärtbaren Epoxidharzmassen, zu klar-durchsichtigen dauerelastischen Produkten mit guter Witterungsbeständigkeit führt, ohne die Lagerbeständigkeit der noch nicht gehärteten Harzmassen in unerwünschter Weise zu verkürzen.

Diese Aufgabe wird erfindungsgemäß durch eine copolymerisierbare Zusammensetzung gelöst, die erhältlich ist durch Umsetzung (A) eines cycloaliphatischen Diepoxids mit (B) einem funktionelle Gruppen aufweisenden Polymeren aus der Gruppe Polyether oder Polysiloxane mit einer Funktionalität von mindestens 1,5 im Molverhältnis (A):(B) von mindestens 2:1 (Epoxidgruppen : funktionelle Gruppen des Polymeren), wobei das Umsetzungsprodukt aus (A) und (B) ein Molekulargewicht im Bereich von 1000 bis 30000 und endständige Epoxidgruppen aufweist.

Eine "Funktionalität von mindestens 1,5" bedeutet, daß die Polymeren-Makromoleküle im Zahlenmittel mindestens 1,5 funktionelle Gruppen aufweisen. Vorzugsweise werden mindestens bifunktionelle Polymeren-Derivate eingesetzt, die dann durch Umsetzung mit einem cycloaliphatischen Diepoxid im angegebenen Molverhältnis zu Produkten mit mindestens zwei endständigen Epoxidgruppen pro Molekül führen.

Vorzugsweise weist das Umsetzungsprodukt aus dem cycloaliphatischen Diepoxid (A) und dem Polymeren (B) ein Molekulargewicht im Bereich von 2000 bis 10000 auf.

Die Reaktionsbedingungen für die Umsetzung der Komponenten (A) und (B) sind dem Fachmann grundsätzlich bekannt. Die Umsetzung wird durch Protonierung der Epoxidgruppen, d.h. in Gegenwart von Säuren bzw. Lewis-Säuren wie quaternären Ammoniumsalzen, katalysiert.

Das cycloaliphatische Diepoxid, das als Komponente (A) eingesetzt wird, wird vorzugsweise ausgewählt aus der Gruppe der Diepoxide cycloaliphatischer Ester von Dicarbonsäuren, der Monoepoxide cycloaliphatischer Ester epoxidierter, cycloaliphatischer Monocarbonsäuren und der mit epoxidierten, cycloaliphatischen Gruppen substituierten, epoxidierten Dioxyspiroalkane.

Besonders bevorzugte cycloaliphatische Diepoxide sind 3,4-Epoxycyclohexylmethyl-3',4'-epoxycyclohexan-carboxylat und 3-(3',4'-Epoxycyclohexyl)-8,9-epoxy-2,4-dioxyspiro(5.5)-undecan.

Diese und andere erfindungsgemäß einsetzbare cycloaliphatische Diepoxide sind beispielsweise in der EP-B-0 119 425 beschrieben.

Das als Komponente (B) erfindungsgemäß eingesetzte Polymeren-Derivat weist vorzugsweise als funktionelle Gruppen Hydroxyl-, Thiol-, Amino- oder Carboxylgruppen auf. Vorzugsweise wird ein Polyether-Derivat ausgewählt aus der Gruppe der Polyalkylenoxid-Diole, -Polyole, -Dithiole und -Polythiole, der Polyalkylenglykol-Diamine und -Polyamine sowie der Polyalkylenoxid-Dicarbonsäuren und -Polycarbonsäuren, wobei die Gruppe der Polyalkylenoxid-Dicarbonsäuren und -Polycarbonsäuren besonders bevorzugt ist.

Als Polyalkylenoxid-Diole und -Polyole können beispielsweise Polyethylenglykol, Polypropylenglykol, Polytetrahydrofuran sowie Copolymere aus Alkylenoxiden wie Polyethylenglykol-Polypropylenglykol-Copolymere und Polyethylenglykol-Polytetrahydrofuran-Copolymere und dergleichen verwendet werden. Ebenso können die den Di- und Polyolen entsprechenden Thiolverbindungen eingesetzt werden.

Als Polyalkylenglykol-Diamine und -Polyamine können beispielsweise Polypropylenglykoldiamin, Polyethylenpropylenglykoldiamin, 1,2,3-Propantris(polypropylenglykolamin) - solche Verbindungen werden beispielsweise von der Firma Texaco unter dem Produktnamen "Jeffamin" vertrieben - sowie tetrahydrofurandiamin und Bis(3-aminopropyl)-polytetrahydrofuran (Hersteller: BASF) verwendet werden. Es lassen sich aber auch Polyalkylenoxiddiamine verwenden, die durch einfache Aminierung der Polyhydroxypolyalkylenoxide mit Ammoniak oder primären Aminen gemäß der BE-PS 634 741 erhalten werden können.

Als Polyalkylenoxid-Dicarbonsäuren oder -Polycarbonsäuren können Polyetherdicarbonsäuren verwendet werden, die sich beispielsweise aus Polyether-Polyolen durch Oxidationsreaktionen oder durch Umsetzung der entsprechenden Polyole mit Carbonsäureanhydriden oder Dicarbonsäuren erhalten lassen. Die Carboxylgruppen lassen sich auch auf andere, an sich bekannte Weise in das Polyethergerüst einbauen, beispielsweise durch Veretherung einer Hydroxycarbonsäure mit einem Polyetherpolyol. Bevorzugt eingesetzt werden Polyether mit endständigen Carboxylgruppen, wie sie beispielsweise von der Firma Th. Goldschmidt unter der Bezeichnung TEGOMER vertrieben werden.

Als erfindungsgemäß einzusetzende Polysiloxane kommen organofunktionelle Polydimethylsiloxane in Betracht, wie sie beispielsweise durch die Firma Th. Goldschmidt vertrieben werden. Vorzugsweise werden α,ω-organofunktionelle Polydimethylsiloxane mit bis zu 50 Dimethylsiloxaneinheiten eingesetzt.

Nach einer besonders bevorzugten Ausführungsform des erfindungsgemäßen Verfahrens werden α-,ω-dicarboxylfunktionalisierte Polydimethylsiloxane mit 10 bis 30 Dimethylsiloxaneinheiten verwendet.

Die erfindungsgemäße copolymerisierbare Zusammensetzung wird vorzugsweise als plastifizierendes, elastifizierendes und flexibilisierendes Mittel für Epoxidharze verwendet, besonders bevorzugt zur Plastifizierung, Elastifizierung und Flexibilisierung von Klebstoffen, Dichtstoffen, Beschichtungsmaterialien und Gießharzen, die jeweils aus Epoxidharzen bestehen oder auf Basis von Epoxidharzen aufgebaut sind.

Bei einer solchen Verwendung der erfindungsgemäßen copolymerisierbaren Zusammensetzung entstehen härtbare Harzmassen, die 10 bis 90 Gew.% der copolymerisierbaren Zusammensetzung enthalten, während der Rest der copolymerisierbaren Bestandteile aus mindestens einem Epoxidharz besteht, und die im übrigen einen Härter oder einen Photoinitiator für die lichtinduzierte Härtung und gegebenenfalls übliche Füllstoffe enthalten.

Vorzugsweise enthalten diese härtbaren Harzmassen 20 bis 60 Gew.% der erfindungsgemäßen copolymerisierbaren Zusammensetzung.

Als Epoxidharze, aus denen der Rest der copolymerisierbaren Bestandteile der härtbaren Harzmasse besteht, werden besonders bevorzugt cycloaliphatische Epoxide verwendet. Gut geeignete Epoxidharze sind beispielsweise die Glycidylether ein- und mehrwertiger Alkohole, insbesondere von Bisphenol-A, die Glycidylester von Di- und Polycarbonsäuren, die Diepoxide des Vinylcyclohexans und des Dicyclopentadiens, gegebenenfalls vorverlängerte und/oder prepolymere Diglycidylether zweiwertiger Phenole oder zweiwertiger aliphatischer Alkohole mit 2 bis 4 C-Atomen sowie 3-(3',4'-Epoxycyclohexyl)-8,9-epoxy-2,4-dioxyspiro(5.5)undecan und 3,4-Epoxycyclohexylmethyl-3',4'-epoxycyclohexylcarboxylat. Diese und weitere geeignete Epoxidharze sind beispielsweise in der EP-A-0 330 909 beschrieben.

Als Härter für die härtbaren Harzmassen, die die erfindungsgemäße copolymerisierbare Zusammensetzung enthalten, können Di- oder Polyamine sowie Di- oder Polyanhydride sowie Thiol- bzw. Mercaptogruppen (-SH) enthaltende Verbindungen verwendet werden, die dem Fachmann für die Härtung von Epoxidharzen bekannt sind.

Geeignete Beispiele für Di- oder Polyamine sind Tetramethylendiamin, Hexamethylen-triamin, 3-Dimethylamino-propylamin, 1-Methylamino-3-(methylamino-methyl)-3,5,5-trimethylcyclohexan, Poly(amino-amide) aus cycloaliphatischen Aminen und Dicarbonsäuren, 1,3,5-Tris-(aminomethyl)-benzol, 1,3-Diamino-1,3-diphenyl-propan.

Als Di- oder Polyanhydrid-Härter können beispielsweise verwendet werden: Benzol-1,2,4,5-tetracarbonsäure-bis-anhydrid, Benzophenon-tetracarbonsäure-bis-anhydrid, Azoxybenzol-tetracarbonsäure-bis-anhydrid, Diphenylether-2,2',3,3'-tetracarbonsäure-bis-anhydrid, Diphenylmethanol-3,3',4,4'-tetracarbonsäure-bis-anhydrid, Biphenyl-2,3,3',4'-tetracarbonsäure-bis-anhydrid.

Für die Härtung mit SH-Gruppen enthaltenden Verbindungen können beispielsweise Di- und Polymercaptoether, Mercaptogruppen enthaltende Polyester, 2,4-Bis(2,3-dimercapto-propyloxy-thiocarbonylamino)-toluol verwendet werden.

Für die lichtinduzierte Härtung können beispielsweise Aryldiazoniumsalze, Diaryliodoniumsalze, Triarylsulfoniumsalze sowie metallocenartige Komplexsalze als Photoinitiatoren verwendet werden, wie sie beispielsweise in der EP-A-0 0 330 909 beschrieben sind.

Die härtbare Harzmasse enthält vorzugsweise 0,1 bis 10 Gew.%, besonders bevorzugt 0,5 bis 5 Gew.%, mindestens eines der genannten Photoinitiatoren.

Die härtbare Harzmasse kann gegebenenfalls übliche Füllstoffe enthalten, wie sie in der EP-A-0 330 909, beispielhaft aufgezählt sind. Diese Füllstoffe umfassen auch Zusatzstoffe wie Sensibilisatoren, Pigmente, Farbstoffe und Antioxidantien.

Die härtbare Harzmasse zeichnet sich durch eine hohe Lagerbeständigkeit aus. Die daraus hergestellten gehärteten Produkte sind lichtecht, vollkommen klar und durchsichtig, dauerelastisch und witterungsbeständig. Aus den Harzmassen hergestellte Klebeverbindungen, Dichtungen, Beschichtungen, Vergüsse und dergleichen halten aufgrund der ihnen durch den Zusatz an der erfindungsgemäßen copolymerisierbaren Zusammensetzung verliehenen Flexibilität, Elastizität und Plastizität auch hohen mechanischen Beanspruchungen und extremen Temperaturwechselbelastungen stand, ohne ihre dauerelastischen Eigenschaften zu verlieren.

Die Erfindung wird nachfolgend anhand der Beispiele weiter erläutert:

### Beispiel 1

In einer wasserfreien mit Stickstoff gespülten Apparatur werden 1590 g (1,2 Val) eines carboxy-funktionellen Polyethers (Tetramethylenoxy-ethyloxy-propyloxy-Copolymer, Tegomer C-3101, Säureäquivalent = 1325) vorgelegt und erst mit 302 g (1,2 Mol) 3,4-Epoxycyclohexylmethyl-3,4-epoxycyclohexan-carboxylat (Degacure K 126, Hersteller: Degussa) und weiter mit 378 g (entspricht 20 Gew.% Überschuß) Degacure K 126 versetzt. Zu dieser Mischung werden 0,6 g Tetramethylammoniumchlorid zugegeben und anschließend 5 Stunden bei 120°C gerührt. Das Reaktionsprodukt, bestehend aus 80 Gew.% Polymer und 20 Gew.% Degacure K 126, wird ohne weitere Aufarbeitung in den nachfolgenden erfindungsgemäßen Mischungen eingesetzt (Epoxid-Äquivalent 631 g).

### Beispiel 2

50 g des nach Beispiel 1 erhaltenen Produkts werden mit 50 g 3,4-Epoxycyclohexylmethyl-3,4-epoxycyclohexan-carboxylat (Degacure K 126), 5 g eines Photoinitiators für die kationische Polymerisation (Ferrocen-hexafluorophosphat, Irgacure 261, Hersteller: Ciba-Geigy) und 2 g Cumolhydroperoxid zu einer homogenen flüssigen Klebstoffmasse vermischt.

Diese Masse weist eine Viskosität von 1500 mPa.s (Platte-Kegel-Viskosimeter) auf und wird in den nachfolgenden Prüfungen eingesetzt.

An Zugfestigkeitsprüfkörpern der Maße 26 mm x 6 mm x 2 mm (Schulterstäbchen-Meßstrecke 10 mm x 2 mm x 2 mm, Bestrahlung 5 Minuten DELO-Lux 03 Vorder- und Rückseite, Aushärtung 20 Minuten bei 120°C im Umlufttrockenschrank) werden 8,0 MPa Zugfestigkeit bei 25,8 % Reißdehnung gemessen (Zwick-Universalprüfgerät, Abzugsgeschwindigkeit 5 mm/min).

An Biegefestigkeitsprüfkörpern der Maße 25 x 4 x 2 mm (Bestrahlung und Aushärtung wie bei Zugfestigkeitsprüfkörpern) werden 8,8 MPa Biegefestigkeit bei 3,8 mm Durchbiegung bis zum Bruch gemessen (Zwick-Universalprüfgerät, Prüfgeschwindigkeit 10 mm/min).

### Beispiel 3

In einer wasserfreien mit Stickstoff gespülten Apparatur werden 65,8 g (20 mVal) Polytetrahydrofurandiamin 5200 (Basenäquivalent 3290) in 10,8 g (40 mMol) 3,4-Epoxycyclohexylmethyl-3,4-epoxycyclohexan-carboxylat (Degacure K 126) vorgelegt und mit weiteren 15,3 g (20 Gew.% Überschuß) Degacure K 126 versetzt. Diese Mischung wird mit 0,3 ml konzentrierter Salzsäure versetzt, 3 Tage bei 120°C gerührt und auf Raumtemperatur abgekühlt. Das Reaktionsprodukt, bestehend aus 80 Gew.% Polymer und 20 Gew.% Degacure K 126, wird ohne weitere Aufarbeitung in den nachfolgenden erfindungsgemäßen Mischungen eingesetzt (Epoxid-Äquivalent 631 g).

### Beispiel 4

10 g des nach Beipiel 3 erhaltenen Produkts werden mit 90 g 3,4-Epoxycyclohexylmethyl-3,4-epoxycyclohexan-carboxylat (Degacure K 126) und 3 g eines Photoinitiators für die kationische Polymerisation (Ferrocen-hexafluorophosphat, Irgacure 261) zu einer homogenen flüssigen Klebstoffmasse vermischt.

Diese Masse weist eine Viskosität von 790 mPa.s (Platte-Kegel-Viskosimeter) auf und wird in den nachfolgenden Prüfungen eingesetzt.

### Beispiel 5

20 g des nach Beispiel 3 erhaltenen Produkts werden mit 80 g 3,4-Epoxycyclohexylmethyl-3,4-epoxycyclohexan-carboxylat (Degacure K 126) und 3 g eines Photoinitiators für die kationische Polymerisation (Ferrocen-hexafluorophosphat, Irgacure 261) zu einer homogenen flüssigen Klebstoffmasse vermischt.

Diese Masse weist eine Viskosität von 1650 mPa.s (Platte-Kegel-Viskosimeter) auf und wird in den nachfolgenden Prüfungen eingesetzt.

Zugfestigkeits- und Biegefestigkeitsprüfkörper werden wie im Beispiel 2 beschrieben hergestellt und geprüft:

| Meßwerte Beispiel | Zugfestigkeit | Biegefestigkeit |
|---|---|---|
| 4 | 20 MPa 13,3 % Reißdehnung | 31,6 MPa 2,8 mm Durchbiegung |
| 5 | 10 MPa 41 % Reißdehnung | 7,0 MPa 3,9 mm Durchbiegung (ohne Bruch!) |

### Beispiel 6

In einer wasserfreien, mit Stickstoff gespülten Apparatur werden 1220 g eines α-,ω-carboxyfunktionalisierten Polysiloxans mit einem Carboxy-Äquivalent von 610 g/Äquivalent vorgelegt und 553 g Degacure K 126 sowie 0,5 g Tetraethylammoniumbromid zugegeben. Die Mischung wird 4 Stunden bei 110°C und anschießend 2 Stunden bei 120°C gerührt. Das Reaktionsprodukt hat ein Epoxy-Äquivalent von 810 g und wird ohne weitere Aufarbeitung für die Herstellung der nachfolgend beschriebenen Mischungen eingesetzt.

### Beispiele 7 und 8

Aus dem nach Beispiel 6 hergestellten epoxyfunktionalisierten Polysiloxan, dem cycloaliphatischen Diepoxidharz Degacure K 126 und dem Photointitiator Irgacure 261 werden die Mischungen gemäß folgender Tabelle bereitet und, wie in Beispiel 2 beschrieben, ausgeprüft.

| | Beispiel 7 | Beispiel 8 |
|---|---|---|
| 1. Zusammensetzung (g) | | |
| Polysiloxan gemäß Beispiel 6 | 10 | 15 |
| Degacure K 126 | 84,5 | 79 |
| Irgacure 261 | 4 | 5 |
| Cumolhydroperoxid | 1,5 | 1 |

| 2. Prüfergebnisse | | |
|---|---|---|
| Viskosität / mPas | 1100 | 1550 |
| Zugfestigkeit / MPa | 18 | 16 |
| Biegefestigkeit / MPa | 16,9 | 12,7 |
| Durchbiegung / mm | 3,6 | 3,4 |
| Reißdehnung % | 14,2 | 18,6 |

### Vergleichsbeispiel 1

20 g eines Reaktionsprodukts einer Polyetherdicarbonsäure mit Bisphenol-A-diglycidylether (Struktol Polydis VP 36221-2, 20 % Elastomergehalt, Hersteller: Schill & Seilacher GmbH & Co., Hamburg) werden mit 80 g 3,4-Epoxycyclohexylmethyl-3,4-epoxycyclohexan-carboxylat (Degacure K 126) und 3 g eines Photoinitiators für die kationische Polymerisation (Ferrocen-hexofluorophosphat, Irgacure 261) zu einer homogenen flüssigen Klebstoffmasse vermischt.

Diese Masse weist eine Viskosität von 750 mPa.s (Platte-Kegel-Viskosimeter) auf und wird in den nachfolgenden Prüfungen eingesetzt.

Zugfestigkeits- und Biegefestigkeitsprüfkörper werden wie in Beispiel 2 beschrieben hergestellt und geprüft.

Meßwerte:
Zugfestigkeit 40 MPa bei 4 % Reißdehnung
Biegefestigkeit 88 MPa bei 1,4 mm Durchbiegung bis zum Bruch

Die erfindungsgemäßen Massen zeigen gegenüber den Massen des Vergleichsbeispiels überraschend höhere Reißdehnungen in der Zugfestigkeitsprüfung und überraschend hohe Durchbiegungsstrecken in der Biegefestigkeitsprüfung. In einem Fall (Beispiel 5) wurde bis zum Ende der Meßstrecke kein Bruch beobachtet.

## Patentansprüche

1. Copolymerisierbare Zusammensetzung, erhältlich durch Umsetzung (A) eines cycloaliphatischen Diepoxids mit (B) einem funktionelle Gruppen aufweisenden Polymeren aus der Gruppe Polyether oder Polysiloxane mit einer Funktionalität von mindestens 1,5 im Molverhältnis (A):(B) von mindestens 2:1 (Epoxidgruppen : funktionelle Gruppen des Polymeren), wobei das Umsetzungsprodukt aus (A) und (B) ein Molekulargewicht im Bereich von 1000 bis 30000, vorzugsweise von 2000 bis 10000, sowie endständige Epoxidgruppen aufweist.

2. Copolymerisierbare Zusammensetzung nach Anspruch 1, **dadurch gekennzeichnet**, daß das cycloaliphatische Diepoxid ausgewählt ist aus der Gruppe der Diepoxide cycloaliphatischer Ester von Dicarbonsäuren, der Monoepoxide cycloaliphatischer Ester epoxidierter, cycloaliphatischer Monocarbonsäuren und der mit epoxidierten, cycloaliphatischen Gruppen substituierten, epoxidierten Dioxyspiroalkane.

3. Copolymerisierbare Zusammensetzung nach Anspruch 1 oder 2, **dadurch gekennzeichnet**, daß das Polymer als funktionelle Gruppen Hydroxyl-, Thiol-, Amino- oder Carboxylgruppen aufweist.

4. Copolymerisierbare Zusammensetzung nach einem der Ansprüche 1 bis 3, **dadurch gekennzeichnet**, daß das Polyether-Derivat ausgewählt ist aus der Gruppe der Polyalkylenoxid-Diole, -Polyole, -Dithiole und -Polythiole, der Polyalkylenglykol-Diamine und -Polyamine sowie der Polyalkylenoxid-Dicarbonsäuren und -Polycarbonsäuren.

5. Copolymerisierbare Zusammensetzung nach einem der Ansprüche 1 bis 3, **dadurch gekennzeichnet**, daß die Polysiloxane α,ω-dicarboxylfunktionalisierte Polydimethylsiloxane mit bis zu 50 und vorzugsweise 10 bis 30 Dimethylsiloxaneinheiten sind.

6. Härtbare Harzmasse, umfassend 10 bis 90 Gew.% der copolymerisierbaren Zusammensetzung gemäß einem der Ansprüche 1 bis 5, wobei der Rest der copolymerisierbaren Bestandteile aus mindestens einem Epoxidharz besteht, sowie einen Härter oder Photoinitiator und gegebenenfalls übliche Füllstoffe.

7. Härtbare Harzmasse nach Anspruch 6, **dadurch gekennzeichnet**, daß sie 20 bis 60 Gew.% der copolymerisierbaren Zusammensetzung gemäß einem der Ansprüche 1 bis 5 enthält.

8. Verwendung der copolymerisierbaren Zusammensetzung gemäß einem der Ansprüche 1 bis 5 als plastifizierendes, elastifizierendes und flexibilisierendes Mittel für Epoxidharze.

9. Verwendung der copolymerisierbaren Zusammensetzung gemäß einem der Ansprüche 1 bis 5 zur Plastifizierung, Elastifizierung und Flexibilisierung von Klebstoffen, Dichtstoffen, Beschichtungsmaterialien und Gießharzen auf Basis von Epoxidharzen.

## Claims

1. A copolymerisable composition, obtainable by reaction of (A) a cycloaliphatic diepoxide with (B) a polymer having functional groups and selected from the family of polyethers or polysiloxanes with a functionality of at least 1.5 in a molar ratio (A):(B) of at least 2 : 1 (epoxide groups: functional groups of the polymer), wherein the reaction product from (A) and (B) has a molecular weight in the range from 1000 to 30,000, preferably 2000 to 10,000, and terminal epoxide groups.

2. A copolymerisable composition according to claim 1, characterised in that the cycloaliphatic diepoxide is selected from the group of the diepoxides of cycloaliphatic esters of dicarboxylic acids, of the monoepoxides of cycloaliphatic esters of epoxidised, cycloaliphatic monocarboxylic acids and of the epoxidised dioxyspiroalkanes substituted by epoxidised, cycloaliphatic groups.

3. A copolymerisable composition according to claim 1 or 2, characterised in that the polymer has hydroxyl, thiol, amino or carboxyl groups as functional groups.

4. A copolymerisable composition according to any one of claims 1 to 3, characterised in that the polyether derivative is selected from the group of the polyalkylene oxide diols, polyols, dithiols and polythiols, of the polyalkylene glycol diamines and polyamines and of the polyalkylene oxide dicarboxylic acids and polycarboxylic acids.

5. A copolymerisable composition according to any one of claims 1 to 3, characterised in that the polysiloxanes are α,ω-dicarboxylfunctionalised polydimethyl siloxanes with up to 50 and preferably 10 to 30 dimethyl siloxane units.

6. A hardenable resinous mass, containing 10 wt.% to 90 wt.% of the copolymerisable composition according to any one of claims 1 to 5, the remainder of the copolymerisable constituents comprising at least one epoxy resin, and a hardener or photoinitiator and, optionally, conventional fillers.

7. A hardenable resinous mass according to claim 6, characterised in that it contains 20 wt.% to 60 wt.% of the copolymerisable composition according to any one of claims 1 to 5.

8. Use of the copolymerisable composition according to any one of claims 1 to 5 as plasticising, elastifying and flexibilising agents for epoxy resins.

9. Use of the copolymerisable composition according to any one of claims 1 to 5 for plasticising, elastifying and flexibilising adhesives, sealants, coating materials and casting resins based on epoxy resins.

## Revendications

1. Composition copolymérisable, pouvant être obtenue par la réaction (A) d'un diépoxyde cyclo-aliphatique avec (B) un polymère présentant des groupements fonctionnels, issu du groupe des polyéthers ou des polysiloxanes avec une fonctionnalité d'au moins 1,5 dans le rapport molaire (A):(B) au moins égal à 2:1 (groupes époxy : groupements fonctionnels du polymère), le produit de réaction obtenu à partir de (A) et (B) présentant une masse moléculaire dans le domaine compris entre 1000 et 30 000, de préférence entre 2000 et 10 000, ainsi que des groupes époxy en fin de chaîne.

2. Composition copolymérisable selon la revendication 1, caractérisée en ce que le diépoxyde cyclo-aliphatique est choisi dans le groupe diépoxy des esters cyclo-aliphatiques des acides dicarboxyliques, des monoépoxydes des esters cyclo-aliphatiques des acides monocarboxyliques cycle-aliphatiques époxydés et des dioxyspiroalcanes époxydés, substitués par les groupes cyclo-aliphatiques époxydés.

3. Composition copolymérisable selon la revendication 1 ou 2, caractérisée en ce que le polymère contient des groupes hydroxyles, des groupes thiols, des groupes amino ou des groupes carboxyliques, en tant que groupements fonctionnels.

4. Composition copolymérisable selon l'une quelconque des revendications 1 à 3, caractérisée en ce que le dérivé de polyéther est choisi dans le groupe des polyoxydes d'alcène-diols, -polyols, -dithiols et -polythiols, dans le groupe des polyalkylèneglycoldiamines et -polyamines, ainsi que dans le groupe -des acides polyoxydes d'alcène dicarboxyliques et -polycarboxyliques.

5. Composition copolymérisable selon l'une quelconque des revendications 1 à 3, caractérisée en ce que les polysiloxanes sont des siloxanes de polydiméthyle comportant des fonctions α,ω-dicarboxyles contenant jusqu'à 50 et de préférence 10 à 30 unités de siloxane de diméthyle.

6. Mélange de résine durcissable, représentant 10 à 90 % en poids de la composition copolymérisable selon l'une des revendications 1 à 5, le reste des composants copolymérisables étant constitué au moins par une résine époxy, ainsi qu'un durcisseur ou un photo-excitant et, le cas échéant, d'autres matières de charge.

7. Mélange de résine durcissable selon la revendication 6, caractérisé en ce qu'il contient 20 à 60 % en poids de la composition copolymérisable conforme à l'une des revendications 1 à 5.

8. Utilisation de la composition copolymérisable selon l'une des revendications 1 à 5, sous forme d'agent plastifiant, élastifiant et flexibilisant pour des résines époxy.

9. Utilisation de la composition copolymérisable selon l'une des revendications 1 à 5 pour le ramollissement, l'élastification et la flexibilisation des colles, des matières assurant l'étanchéité, des matières de revêtement et des résines de coulée, basées sur des résines époxy.
